# EUROPÄISCHE PATENTSCHRIFT

(11) **EP 3 900 485 B1**
(45) Veröffentlichungstag und Bekanntmachung des Hinweises auf die Patenterteilung: **04.09.2024**
(21) Anmeldenummer: 19828770.8
(22) Anmeldetag: 20.12.2019
(51) Int. Cl.: H05B 6/12

(54) **INDUKTIONSENERGIEÜBERTRAGUNGSSYSTEM**
INDUCTION ENERGY TRANSMISSION SYSTEM
SYSTÈME DE TRANSFERT D'ÉNERGIE PAR INDUCTION

(30) Priorität: 21.12.2018 ES 201831266
(43) Veröffentlichungstag der Anmeldung: 27.10.2021
(73) Patentinhaber: BSH Hausgeräte GmbH, 81739 München (DE)
(72) Erfinder: CABEZA GOZALO, Tomas, 50010 Zaragoza (ES); LASOBRAS BERNAD, Javier, 50016 Ejea de los Caballeros (Zaragoza) (ES); LLORENTE GIL, Sergio, 50009 Zaragoza (ES); MIR BEL, Jorge, 50019 Zaragoza (ES)
(86) Internationale Anmeldenummer: PCT/EP2019/086749
(87) Internationale Veröffentlichungsnummer: WO 2020/128014

(56) Entgegenhaltungen:
- WO-A1-2010/080738
- WO-A1-2014/056785
- WO-A1-2014/056786
- WO-A1-2014/075922
- WO-A1-2016/185303
- DE-A1- 102009 058 271
- DE-A1- 102015 222 797
- GB-A- 2 557 774

## Beschreibung

Die Erfindung betrifft ein Induktionsenergieübertragungssystem nach dem Anspruch 1. Aus den nachveröffentlichten spanischen Patentanmeldungen P201830438 und P201830435 ist jeweils bereits ein Induktionsenergieübertragungssystem bekannt, welches eine als Kochfeld ausgebildete Versorgungseinheit aufweist. Ein Versorgungsinduktionselement der Versorgungseinheit stellt in einem Betriebszustand induktiv Energie bereit, und zwar an eine als Aufstelleinheit ausgebildete Aufnahmeeinheit, die Teil des Induktionsenergieübertragungssystems ist. Die Aufnahmeeinheit weist ein als Spule ausgebildetes Aufnahmeinduktionselement auf, das in dem Betriebszustand in einem Zeitabschnitt die von dem Versorgungsinduktionselement bereitgestellte Energie empfängt und in elektrische Energie transferiert. Darüber hinaus weist die Aufnahmeeinheit ein weiteres Aufnahmeinduktionselement auf, das aus ferromagnetischem Material besteht. In dem Betriebszustand empfängt das weitere Aufnahmeinduktionselement in einem weiteren Zeitabschnitt die von dem Versorgungsinduktionselement bereitgestellte Energie und transferiert diese in thermische Energie. Der Zeitabschnitt und der weitere Zeitabschnitt sind hierbei überlappungsfrei.

DE 10 2009 058271 A1 (JASCH INGOLF [DE]; SCHACHT DIETRICH WILHELM [DE]) 16. Juni 2011 (2011-06-16) beschreibt ein elektrisch isolierendes Gefäß zur Aufnahme einer Materie auf. Das Gefäß weist einen Gefäßboden für eine kontaktfreie Ankopplung von elektrischer Energie und ihre Umwandlung in temperierende Wärme auf.

Die Aufgabe der Erfindung besteht insbesondere darin, ein gattungsgemäßes System mit verbesserten Eigenschaften hinsichtlich einer Effizienz bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Es wird ein Induktionsenergieübertragungssystem, insbesondere ein Induktionsgarsystem und vorteilhaft ein Induktionskochsystem, mit zumindest einer Versorgungseinheit, welche zumindest ein Versorgungsinduktionselement aufweist, das in wenigstens einem Betriebszustand induktiv Energie bereitstellt, und mit zumindest einer Aufnahmeeinheit vorgeschlagen, welche zumindest ein Aufnahmeinduktionselement, das in dem Betriebszustand wenigstens einen Teil der von dem Versorgungsinduktionselement bereitgestellten Energie empfängt und wenigstens einen Großteil der aufgenommenen Energie in elektrische Energie, insbesondere zum Zwecke einer elektrischen Energieversorgung, transferiert, und zumindest ein weiteres Aufnahmeinduktionselement aufweist, das in dem Betriebszustand wenigstens teilweise zeitgleich, insbesondere zu dem Empfang des Teils der von dem Versorgungsinduktionselement bereitgestellten Energie durch das Aufnahmeinduktionselement, wenigstens einen weiteren Teil der von dem Versorgungsinduktionselement bereitgestellten Energie empfängt und wenigstens einen Großteil der aufgenommenen Energie in thermische Energie, insbesondere in Heizenergie, transferiert.

Durch eine derartige Ausgestaltung kann insbesondere eine hohe Effizienz erreicht werden, und zwar insbesondere in Bezug auf elektrische Verluste und/oder auf einen Betrieb. Durch die induktive Bereitstellung von Energie kann insbesondere eine umweltschonende Ausgestaltung und/oder eine optimale Temperaturregelung, beispielsweise in einem automatischen thermischen Behandlungsprozess, erzielt werden. Insbesondere können geringe elektrische Verluste und/oder eine nahezu vollständige Nutzung der von dem Versorgungsinduktionselement bereitgestellten Energie ermöglicht werden.

Unter einem "Induktionsenergieübertragungssystem", insbesondere unter einem "Induktionsgarsystem" und vorteilhaft unter einem "Induktionskochsystem", soll insbesondere ein System verstanden werden, welches zumindest eine Versorgungseinheit, welche insbesondere zumindest ein Induktionsgargerät und vorteilhaft zumindest ein Induktionskochfeld aufweisen und vorzugsweise als ein Induktionsgargerät und besonders bevorzugt als ein Induktionskochfeld ausgebildet sein könnte, aufweist und welches eine Hauptfunktion in Form einer Energieübertragung aufweist. Beispielsweise könnte das Induktionsenergieübertragungssystem als ein Induktionshandwerkzeugmaschinensystem ausgebildet sein. Die Versorgungseinheit könnte beispielsweise zumindest einen Transformator aufweisen und insbesondere als ein Transformator ausgebildet sein. Insbesondere könnte die Aufnahmeeinheit als eine Handwerkzeugmaschine, wie beispielsweise ein Bohrer und/oder ein Elektroschrauber und/oder ein Bohrhammer und/oder eine Säge, ausgebildet sein. Das Induktionsenergieübertragungssystem könnte insbesondere für zumindest ein selbstfahrendes Arbeitsgerät und/oder für zumindest eine Fernsteuerung und/oder für zumindest eine Fernbedienung vorgesehen sein. Insbesondere könnte die Aufnahmeeinheit als ein selbstfahrendes Arbeitsgerät und/oder als eine Fernsteuerung und/oder als eine Fernbedienung ausgebildet sein. Das selbstfahrende Arbeitsgerät könnte beispielsweise als ein selbstfahrender Rasenmäher und/oder als ein selbstfahrender Staubsauger ausgebildet sein. Die Fernsteuerung und/oder die Fernbedienung könnte insbesondere zu einer Bedienung und/oder zu einer Steuerung zumindest einer Jalousie und/oder zumindest eines Elektrogeräts, insbesondere zumindest eines Haushaltselektrogeräts, und/oder zumindest eines Modellobjekts, wie beispielsweise eines Modellautos und/oder eines Modellflugzeugs und/oder eines Modellboots, vorgesehen sein. Vorzugsweise ist das

Induktionsenergieübertragungssystem als ein Induktionsgarsystem ausgebildet.

Beispielsweise könnte das Induktionsenergieübertragungssystem als ein Induktionsbackofensystem und/oder als ein Induktionsgrillsystem ausgebildet sein. Insbesondere könnte die Versorgungseinheit als ein Induktionsbackofen und/oder als ein Induktionsgrill ausgebildet sein. Vorteilhaft ist das Induktionsenergieübertragungssystem als ein Induktionskochfeldsystem ausgebildet. Die Versorgungseinheit ist insbesondere als ein Induktionskochfeld ausgebildet. Die Aufnahmeeinheit könnte beispielsweise zumindest eine Aufstelleinheit aufweisen und insbesondere als Aufstelleinheit ausgebildet sein.

Unter einer "Versorgungseinheit" soll insbesondere eine Einheit verstanden werden, welche in dem Betriebszustand induktiv Energie, insbesondere an die Aufnahmeeinheit, bereitstellt und welche insbesondere eine Hauptfunktion in Form einer Energiebereitstellung aufweist. Zu der Bereitstellung von Energie weist die Versorgungseinheit insbesondere zumindest ein Versorgungsinduktionselement auf, welches insbesondere zumindest eine Spule, insbesondere zumindest eine Primärspule, aufweist und welches insbesondere in dem Betriebszustand induktiv Energie bereitstellt.

Unter einem "Induktionselement" soll insbesondere ein Element verstanden werden, welches in dem Betriebszustand Energie insbesondere zum Zweck einer induktiven Energieübertragung bereitstellt und/oder aufnimmt. Insbesondere stellt in dem Betriebszustand ein als Versorgungsinduktionselement ausgebildetes Induktionselement Energie insbesondere zum Zweck einer induktiven Energieübertragung bereit. Das Versorgungsinduktionselement könnte insbesondere zumindest eine Spule, insbesondere zumindest eine Primärspule, aufweisen, welche insbesondere zu einer induktiven Energieübertragung, insbesondere an zumindest eine Sekundärspule und/oder an zumindest ein thermisches Energieaufnahmeelement, vorgesehen sein könnte. Insbesondere nimmt in dem Betriebszustand ein als Aufnahmeinduktionselement ausgebildetes Induktionselement Energie insbesondere zum Zweck einer induktiven Energieübertragung auf, und zwar insbesondere von dem Versorgungsinduktionselement.

Die Sekundärspule könnte beispielsweise Teil der Aufnahmeeinheit sein, insbesondere zumindest eines Aufnahmeinduktionselements der Aufnahmeeinheit, vorteilhaft des Aufnahmeinduktionselements der Aufnahmeeinheit. Das Aufnahmeinduktionselement könnte insbesondere zumindest eine Spule, insbesondere zumindest eine Sekundärspule, aufweisen, welche insbesondere zu einer induktiven Energieaufnahme von dem Versorgungsinduktionselement vorgesehen sein könnte.

Das thermische Energieaufnahmeelement könnte beispielsweise Teil der Aufnahmeeinheit sein, insbesondere zumindest eines Aufnahmeinduktionselements der Aufnahmeeinheit, vorteilhaft des weiteren Aufnahmeinduktionselements der Aufnahmeeinheit. Das weitere Aufnahmeinduktionselement könnte insbesondere zumindest ein thermisches Energieaufnahmeelement, insbesondere zumindest das thermische Energieaufnahmeelement, aufweisen, welches insbesondere zu einer induktiven Energieaufnahme von dem Versorgungsinduktionselement und/oder insbesondere zu einer induktiven Erhitzung durch das Versorgungsinduktionselement vorgesehen sein könnte.

Beispielsweise könnte das Induktionselement zumindest zweiteilig und insbesondere mehrteilig ausgebildet sein. Vorzugsweise ist das Induktionselement einteilig und/oder einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Das Versorgungsinduktionselement könnte beispielsweise als ein Transformator ausgebildet sein. Alternativ oder zusätzlich könnte das Versorgungsinduktionselement insbesondere als ein Induktionsheizelement ausgebildet sein und insbesondere zu einer Energieübertragung an zumindest eine als Aufstelleinheit ausgebildete Aufnahmeeinheit insbesondere zum Zweck einer Erhitzung der Aufstelleinheit vorgesehen sein. Das Versorgungsinduktionselement könnte in dem Betriebszustand insbesondere ein Wechselfeld, insbesondere ein elektromagnetisches Wechselfeld, mit einer Frequenz von mindestens 1 Hz, insbesondere von mindestens 2 Hz, vorteilhaft von mindestens 5 Hz und vorzugsweise von mindestens 10 Hz bereitstellen. Insbesondere könnte das Versorgungsinduktionselement in dem Betriebszustand insbesondere ein Wechselfeld, insbesondere ein elektromagnetisches Wechselfeld, mit einer Frequenz von maximal 150 kHz, insbesondere von maximal 120 kHz, vorteilhaft von maximal 100 kHz und vorzugsweise von maximal 80 kHz bereitstellen. Ein insbesondere als Induktionsheizelement ausgebildetes Versorgungsinduktionselement könnte in dem Betriebszustand insbesondere ein hochfrequentes Wechselfeld, insbesondere ein hochfrequentes elektromagnetisches Wechselfeld, mit einer Frequenz von mindestens 15 kHz und insbesondere von maximal 100 kHz bereitstellen.

Beispielsweise könnte die Versorgungseinheit genau ein Versorgungsinduktionselement aufweisen. Die Versorgungseinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Versorgungsinduktionselemente aufweisen, welche insbesondere in dem Betriebszustand jeweils induktiv Energie bereitstellen könnten, und zwar insbesondere an eine insbesondere einzige Aufnahmeeinheit oder an zumindest zwei Aufnahmeeinheiten. Insbesondere könnte ein insbesondere beliebiges der Versorgungsinduktionselemente in einem Nahbereich zu zumindest einem weiteren der Versorgungsinduktionselemente angeordnet sein. Zumindest ein Teil der Versorgungsinduktionselemente könnte beispielsweise in einer Reihe und/oder in Form einer Matrix angeordnet sein.

Unter einer "Aufnahmeeinheit" soll insbesondere eine Einheit verstanden werden, welche in wenigstens einem Betriebszustand, insbesondere induktiv, Energie empfängt und welche insbesondere eine Hauptfunktion in Form einer Energieaufnahme aufweist. Die Aufnahmeeinheit könnte beispielsweise zumindest einen Verbraucher aufweisen, welcher in dem Betriebszustand insbesondere Energie verbrauchen könnte. Die Aufnahmeeinheit könnte beispielsweise zumindest eine Handwerkzeugmaschine, wie beispielsweise zumindest einen Bohrer und/oder zumindest einen Elektroschrauber und/oder zumindest einen Bohrhammer und/oder zumindest eine Säge, und/oder zumindest ein Auto und/oder zumindest ein mobiles Gerät, wie beispielsweise zumindest einen Laptop und/oder zumindest ein Tablet und/oder zumindest ein Mobiltelefon, und/oder zumindest eine Fernsteuerung und/oder zumindest eine Fernbedienung und/oder zumindest ein selbstfahrendes Arbeitsgerät aufweisen und insbesondere als solches ausgebildet sein. Insbesondere könnte die Aufnahmeeinheit zumindest ein Gargeschirr aufweisen und insbesondere als ein Gargeschirr ausgebildet sein, wie beispielsweise als ein Backblech und/oder als ein Topf. Vorteilhaft könnte die Aufnahmeeinheit zumindest eine Aufstelleinheit aufweisen und insbesondere als eine Aufstelleinheit ausgebildet sein. Beispielsweise könnte die von der Aufnahmeeinheit aufgenommene Energie in dem Betriebszustand insbesondere direkt in zumindest eine weitere Energieform umgewandelt werden, wie beispielsweise in Wärme.

Unter "wenigstens einem Großteil" soll insbesondere ein Anteil, insbesondere ein Massenanteil und/oder ein Volumenanteil und/oder ein Anteil einer Anzahl und/oder ein Energieanteil, von mindestens 70 %, insbesondere von mindestens 80 %, vorteilhaft von mindestens 90 % und vorzugsweise von mindestens 95 % verstanden werden.

Insbesondere nehmen der von dem Aufnahmeinduktionselement empfangene Teil der von dem Versorgungsinduktionselement bereitgestellten Energie und der von dem weiteren Aufnahmeinduktionselement empfangene Teil der von dem Versorgungsinduktionselement bereitgestellten Energie jeweils Werte an, welche kleiner sind als ein Wert der von dem Versorgungsinduktionselement bereitgestellten Energie und welche insbesondere in Summe maximal den Wert der von dem Versorgungsinduktionselement bereitgestellten Energie annehmen können.

Das Aufnahmeinduktionselement könnte in dem Betriebszustand insbesondere wenigstens einen Großteil des Teils der von dem Versorgungsinduktionselement bereitgestellten Energie in einen induzierten Wechselstrom transferieren, und zwar insbesondere im Fall, in welchem das Aufnahmeinduktionselement mit zumindest einem weiteren Induktionselement, welches insbesondere zumindest eine Spule aufweist, elektrisch in Reihe geschaltet ist. Alternativ oder zusätzlich könnte das Aufnahmeinduktionselement in dem Betriebszustand insbesondere wenigstens einen Großteil des Teils der von dem Versorgungsinduktionselement bereitgestellten Energie in eine induzierte Spannung transferieren.

Unter der Wendung, dass das weitere Aufnahmeinduktionselement in dem Betriebszustand "wenigstens teilweise zeitgleich", insbesondere zu dem Empfang des Teils der von dem Versorgungsinduktionselement bereitgestellten Energie durch das Aufnahmeinduktionselement, wenigstens einen weiteren Teil der von dem Versorgungsinduktionselement bereitgestellten Energie empfängt, soll insbesondere verstanden werden, dass ein Empfang des weiteren Teils durch das weitere Aufnahmeinduktionselement und ein Empfang des Teils durch das Aufnahmeinduktionselement in dem Betriebszustand in zumindest einem Zeitintervall gleichzeitig erfolgen und/oder zeitlich überlappen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Beispielsweise könnten das Aufnahmeinduktionselement und das weitere Aufnahmeinduktionselement von gleichem Typ sein und insbesondere identisch ausgebildet sein. Das Aufnahmeinduktionselement und das weitere Aufnahmeinduktionselement könnten beispielsweise jeweils zumindest eine Spule aufweisen. Insbesondere könnte das weitere Aufnahmeinduktionselement den empfangenen weiteren Teil zunächst in elektrische Energie und insbesondere anschließend in thermische Energie transferieren. Vorzugsweise sind das Aufnahmeinduktionselement und das weitere Aufnahmeinduktionselement typverschieden. Insbesondere sind das Aufnahmeinduktionselement und das weitere Aufnahmeinduktionselement von verschiedenem Typ. Beispielsweise könnte das Aufnahmeinduktionselement zumindest eine Spule aufweisen und insbesondere als zumindest eine Spule, insbesondere als die Spule, ausgebildet sein. Das weitere Aufnahmeinduktionselement könnte beispielsweise wenigstens zu einem Großteil aus zumindest einem ferromagnetischen Material und/oder aus zumindest einem ferrimagnetischen Material bestehen und insbesondere als ein zu beheizendes Objekt und/oder als ein Heizblech ausgebildet sein. Insbesondere könnte das weitere Aufnahmeinduktionselement zumindest ein Teilbereich zumindest eines Aufnahmegehäuses der Aufnahmeeinheit sein, und zwar vorteilhaft zumindest ein in dem Betriebszustand dem Versorgungsinduktionselement zugewandter Teilbereich zumindest eines Aufnahmegehäuses der Aufnahmeeinheit. Unter "wenigstens zu einem Großteil" soll insbesondere zu einem Anteil, insbesondere einem Massenanteil und/oder einem Volumenanteil und/oder einem Anteil einer Anzahl und/oder ein Energieanteil, von mindestens 70 %, insbesondere von mindestens 80 %, vorteilhaft von mindestens 90 % und vorzugsweise von mindestens 95 % verstanden werden. Dadurch kann die von dem Versorgungsinduktionselement bereitgestellte Energie insbesondere auf effiziente Art und Weise in zumindest zwei verschiedene Energietypen transferiert werden, und zwar insbesondere in verlustarmer und/oder optimierter Weise.

Zudem wird vorgeschlagen, dass das Induktionsenergieübertragungssystem zumindest eine Funktionseinheit aufweist, welcher das Aufnahmeinduktionselement in dem Betriebszustand wenigstens einen Großteil der elektrischen Energie zu einer Energieversorgung bereitstellt. Unter einer "Funktionseinheit" soll insbesondere eine Einheit verstanden werden, welche in dem Betriebszustand, insbesondere in Abhängigkeit der elektrischen Energie und/oder in Abhängigkeit einer Ansteuerung durch zumindest eine Steuereinheit, zumindest eine Funktion ausführt. Die Funktionseinheit ist insbesondere als ein elektrischer Verbraucher ausgebildet. Die Funktion könnte beispielsweise eine Bearbeitungsfunktion sein. Beispielsweise könnte die Funktion eine Werkzeugbearbeitungsfunktion sein, wie beispielsweise Bohren und/oder Schrauben und/oder Sägen und/oder Schneiden und/oder Schweißen. Alternativ oder zusätzlich könnte die Funktion eine Lebensmittelbearbeitungsfunktion und/oder eine Lebensmittelbehandlungsfunktion sein, wie beispielsweise Schneiden und/oder Mixen und/oder Zerkleinern und/oder Rühren und/oder Kneten. Die Funktion könnte alternativ oder zusätzlich beispielsweise eine, insbesondere thermische und/oder mechanische, Behandlungsfunktion sein. Dadurch kann insbesondere ein hoher Bedienkomfort erzielt werden, da insbesondere mittels der Funktionseinheit einem Bediener eine manuelle Ausführung der Funktion abgenommen werden kann.

Beispielsweise könnte die Funktionseinheit in dem Betriebszustand wenigstens zu einem Großteil und insbesondere vollständig in der Aufnahmeeinheit integriert sein. Die Funktionseinheit könnte beispielsweise fest und/oder unlösbar mit der Aufnahmeeinheit verbunden sein, beispielsweise über zumindest eine elektrische und/oder mechanische Anbindung. Vorzugsweise ist die Funktionseinheit zu einer separierbaren Kopplung mit der Aufnahmeeinheit vorgesehen. Unter der Wendung, dass die Funktionseinheit zu einer "separierbaren" Kopplung mit der Aufnahmeeinheit vorgesehen ist, soll insbesondere verstanden werden, dass die Funktionseinheit zu einer reversiblen und insbesondere werkzeuglos lösbaren Kopplung mit der Aufnahmeeinheit vorgesehen ist. Insbesondere ist die Funktionseinheit durch einen Bediener, insbesondere in einfacher Weise, manuell, und insbesondere werkzeuglos, mit der Aufnahmeeinheit koppelbar und/oder von der Aufnahmeeinheit lösbar. Dadurch kann insbesondere eine hohe Flexibilität erzielt werden, da, insbesondere in verschiedenen Zeitabschnitten, eine Vielzahl verschiedener Funktionseinheiten mit der Aufstelleinheit, insbesondere mit der gleichen Aufstelleinheit, gekoppelt werden können. Hierdurch kann insbesondere ein hoher Bedienkomfort und/oder eine preisgünstige Ausgestaltung und/oder eine platzsparende Ausgestaltung erzielt werden, da insbesondere auf eine Vielzahl von Aufnahmeeinheiten verzichtet werden kann. Insbesondere kann eine, insbesondere einzige, multifunktionelle Aufstelleinheit bereitgestellt werden, welche zu einer separierbaren Kopplung mit einer Vielzahl verschiedener Funktionseinheiten vorgesehen ist und damit insbesondere zu einer Vielzahl an verschiedenen Funktionen herangezogen werden kann.

Ferner wird vorgeschlagen, dass die Funktionseinheit in dem Betriebszustand wenigstens zu einem Großteil und vorteilhaft vollständig auf einer der Versorgungseinheit abgewandten Seite der Aufnahmeeinheit mit der Aufnahmeeinheit gekoppelt ist. Insbesondere ist ein Kopplungsbereich der Funktionseinheit und der Aufnahmeeinheit in dem Betriebszustand wenigstens zu einem Großteil und vorteilhaft vollständig auf einer der Versorgungseinheit abgewandten Seite der Aufnahmeeinheit angeordnet. In dem Betriebszustand ist die Funktionseinheit wenigstens teilweise auf der der Versorgungseinheit abgewandten Seite der Aufnahmeeinheit und/oder oberhalb der Aufnahmeeinheit angeordnet. Beispielsweise könnte zumindest ein Teilbereich der Funktionseinheit auf der der Versorgungseinheit abgewandten Seite der Aufnahmeeinheit und zumindest ein zweiter Teilbereich in einem von der der Versorgungseinheit abgewandten Seite der Aufnahmeeinheit verschiedenen Bereich angeordnet sein, wie beispielsweise auf einer der Versorgungseinheit zugewandten Seite der Aufnahmeeinheit und/oder vorteilhaft in zumindest einem von der Aufnahmeeinheit aufgespannten und/oder umschlossenen und/oder definierten Aufnahmeraum. Dadurch kann insbesondere eine einfache Zugänglichkeit eines Kopplungsbereichs der Funktionseinheit und der Aufnahmeeinheit erreicht werden, wodurch insbesondere ein hoher Bedienkomfort und/oder eine unkomplizierte Kopplung der Funktionseinheit mit der Aufnahmeeinheit ermöglicht werden kann.

Zudem wird vorgeschlagen, dass das Induktionsenergieübertragungssystem zumindest eine Sicherheitseinheit aufweist, welche in dem Betriebszustand zumindest eine Positionierung der Funktionseinheit an der Aufnahmeeinheit überprüft und in Abhängigkeit der Überprüfung zumindest eine Aktion einleitet. Unter einer "Sicherheitseinheit" soll insbesondere eine elektrische und/oder elektronische Einheit verstanden werden, welche insbesondere in Abhängigkeit einer Detektion zumindest einer Positionierungskenngröße die Positionierung der Funktionseinheit an der Aufnahmeeinheit überprüft. Beispielsweise könnte die Sicherheitseinheit zumindest einen Detektor zu einer Detektion zumindest einer Positionierungskenngröße aufweisen. Alternativ oder zusätzlich könnte das Induktionsenergieübertragungssystem insbesondere zumindest eine, insbesondere von der Sicherheitseinheit verschiedene, Sensoreinheit aufweisen, welche insbesondere zumindest einen Detektor zu einer Detektion zumindest einer Positionierungskenngröße aufweisen und insbesondere mittels des Detektors zu einer Detektion zumindest einer Positionierungskenngröße vorgesehen sein könnte. Die Positionierungskenngröße ist insbesondere eine Kenngröße, welche zumindest einen Rückschluss auf zumindest eine Positionierung der Funktionseinheit relativ zu der Aufnahmeeinheit zulässt und/oder welche vorteilhaft zumindest eine Positionierung der Funktionseinheit relativ zu der Aufnahmeeinheit kennzeichnet und/oder charakterisiert. Die Aktion könnte beispielsweise eine Freigabe und/oder eine Verhinderung einer Bereitstellung der elektrischen Energie an die Funktionseinheit sein. Insbesondere könnte die Sicherheitseinheit in dem Betriebszustand im Fall einer, insbesondere durch die Überprüfung festgestellten, ordnungsgemäßen Positionierung der Funktionseinheit an der Aufnahmeeinheit eine Bereitstellung der elektrischen Energie an die Funktionseinheit freigeben und/oder ermöglichen. Die Sicherheitseinheit könnte in dem Betriebszustand insbesondere im Fall einer, insbesondere durch die Überprüfung festgestellten, fehlerhaften Positionierung der Funktionseinheit an der Aufnahmeeinheit eine Bereitstellung der elektrischen Energie an die Funktionseinheit verhindern und/oder blockieren. Die fehlerhafte Positionierung der Funktionseinheit an der Aufnahmeeinheit und eine Abweichung von einer ordnungsgemäßen Positionierung der Funktionseinheit an der Aufnahmeeinheit sind insbesondere identisch und/oder gleichbedeutend. Dadurch kann insbesondere ein besonders hoher Sicherheitsstandard erzielt und/oder eine ineffiziente Energiebereitstellung, die insbesondere aus einer fehlerhaften Positionierung der Funktionseinheit an der Aufnahmeeinheit resultieren könnte, vermieden werden.

Das Induktionsenergieübertragungssystem könnte beispielsweise zumindest ein elektrisches Energieübertragungselement aufweisen, welches insbesondere als elektrisches Kabel ausgebildet und insbesondere die Funktionseinheit und die Aufnahmeeinheit, insbesondere elektrisch und vorteilhaft zusätzlich mechanisch, miteinander verbinden könnte. Vorzugsweise weist die Aufnahmeeinheit zumindest ein Aufnahmeversorgungsinduktionselement auf, welches in dem Betriebszustand induktiv Energie zu der Energieversorgung der Funktionseinheit bereitstellt. Insbesondere ist das Aufnahmeversorgungsinduktionselement als ein in der Aufnahmeeinheit integriertes Versorgungsinduktionselement ausgebildet. Dadurch kann insbesondere eine effiziente Energiebereitstellung an die Funktionseinheit erreicht werden.

Ferner wird vorgeschlagen, dass die Sicherheitseinheit in dem Betriebszustand im Fall einer fehlerhaften Positionierung der Funktionseinheit an der Aufnahmeeinheit das Aufnahmeversorgungsinduktionselement deaktiviert. Beispielsweise könnte die Sicherheitseinheit in dem Betriebszustand im Fall einer fehlerhaften Positionierung der Funktionseinheit an der Aufnahmeeinheit, insbesondere zunächst, zumindest eine Information, insbesondere über zumindest eine Bedienerschnittstelle, ausgeben und insbesondere in Abhängigkeit von zumindest einer Bedieneingabe, insbesondere über die Bedienerschnittstelle, das Aufnahmeversorgungsinduktionselement deaktivieren. In dem Betriebszustand könnte die Sicherheitseinheit beispielsweise im Fall einer fehlerhaften Positionierung der Funktionseinheit an der Aufnahmeeinheit das Aufnahmeversorgungsinduktionselement automatisch, insbesondere unter Vermeidung einer Interaktion über zumindest eine Bedienerschnittstelle, deaktivieren. Dadurch kann insbesondere ein hoher Bedienkomfort und/oder ein hoher Sicherheitsstandard bereitgestellt werden.

Die Funktionseinheit könnte in dem Betriebszustand insbesondere zu einer, insbesondere thermischen und/oder mechanischen, Bearbeitung zumindest eines Objekts und/oder zumindest eines Werkstücks vorgesehen sein, beispielsweise mittels der Bearbeitungsfunktion. Vorzugsweise ist die Funktionseinheit in dem Betriebszustand zu einer Behandlung zumindest eines Lebensmittels und insbesondere zu einem Einsatz in einem Haushalt vorgesehen. Dadurch kann einem Bediener insbesondere eine komfortable Behandlung des Lebensmittels, und zwar insbesondere mittels der Funktionseinheit und vorteilhaft anstatt einer manuellen Behandlung des Lebensmittels, ermöglicht werden.

Weiterhin wird vorgeschlagen, dass die Funktionseinheit in dem Betriebszustand zu einer thermischen Behandlung zumindest eines Lebensmittels vorgesehen ist. Insbesondere könnte die Funktionseinheit zumindest eine Induktionsheizeinheit und/oder zumindest eine Widerstandsheizeinheit aufweisen. Die Funktionseinheit könnte zumindest einen, insbesondere als Garraum ausgebildeten, Aufnahmeraum zu einer Aufnahme des Lebensmittels beispielsweise wenigstens teilweise und insbesondere gemeinsam mit der Aufstelleinheit vollständig begrenzen und/oder definieren. Die Funktionseinheit könnte beispielsweise Teil zumindest einer Heißluft-Fritteuse und insbesondere die Heißluft-Fritteuse gemeinsam mit der Aufstelleinheit ausbilden. Dadurch kann insbesondere eine effiziente Garung des Lebensmittels ermöglicht werden, wodurch insbesondere optimale Garergebnisse erzielt werden können.

Ferner wird vorgeschlagen, dass die Funktionseinheit in dem Betriebszustand zu einer mechanischen Behandlung zumindest eines Lebensmittels vorgesehen ist. Insbesondere könnte die Funktionseinheit zumindest ein Rührgerät und/oder zumindest einen Mixer und/oder zumindest ein Zerkleinerungsgerät und/oder zumindest ein Knetgerät und/oder zumindest ein Schneidgerät wenigstens teilweise und insbesondere gemeinsam mit der Aufstelleinheit vollständig ausbilden und/oder definieren. Dadurch kann insbesondere ein hoher Bedienkomfort erreicht werden.

Die Versorgungseinheit könnte beispielsweise als ein Energieladegerät, insbesondere als ein Induktionsenergieladegerät, ausgebildet und insbesondere dazu vorgesehen sein, mittels des Versorgungsinduktionselements Energie an zumindest eine Aufnahmeeinheit zu übertragen, welche insbesondere als ein mobiles Gerät, wie beispielsweise ein Laptop und/oder als ein Tablet und/oder als ein Handy, und/oder als eine Handwerkzeugmaschine und/oder als ein selbstfahrendes Arbeitsgerät und/oder als eine Fernsteuerung und/oder als eine Fernbedienung ausgebildet sein könnte. Alternativ oder zusätzlich könnte die Versorgungseinheit beispielsweise als ein Gargerät, insbesondere als ein Induktionsgargerät, ausgebildet sein, wie insbesondere als ein Backofen, insbesondere als ein Induktionsbackofen, und/oder als ein Grill, insbesondere als ein Induktionsgrill. Vorzugsweise ist die Versorgungseinheit als ein Kochfeld und vorteilhaft als ein Induktionskochfeld ausgebildet. Insbesondere beheizt die Versorgungseinheit mittels des weiteren Teils der von dem Versorgungsinduktionselement bereitgestellten Energie zumindest einen Teil der Aufnahmeeinheit, insbesondere zumindest einen zumindest einen Aufnahmeraum wenigstens teilweise begrenzenden Boden der Aufnahmeeinheit, der insbesondere durch das weitere Aufnahmeinduktionselement gebildet und/oder definiert sein könnte. Dadurch kann die Aufnahmeeinheit insbesondere mit der für die Aufnahmeeinheit vorgesehenen Energie versorgt werden, wodurch insbesondere optimale Garergebnisse und/oder eine zuverlässige Funktionstüchtigkeit zumindest der Funktionseinheit erreicht werden. Des Weiteren kann insbesondere ein gewöhnliches Kochfeld zu einer Energieübertragung herangezogen werden, wodurch insbesondere auf zusätzliche Energiequellen, beispielsweise innerhalb der Aufstelleinheit und/oder zu einer Übertragung von Energie an die Aufstelleinheit, verzichtet werden kann. Es kann insbesondere eine geringe Garzeit ermöglicht werden, wodurch insbesondere eine kurze Dauer zwischen einer Entnahme eines Lebensmittels aus einem Kältegerät bis zu einer Fertigstellung einer Garung dieses Lebensmittels ermöglicht werden kann.

Gemäss der Erfindung wird die Aufnahmeeinheit als eine Aufstelleinheit ausgebildet, welche insbesondere zu einem Aufstellen auf zumindest einer Aufstellplatte vorgesehen ist und welche zumindest einen Aufnahmeraum zu einer Aufnahme von Lebensmitteln, insbesondere von Gargut, aufweist. Unter einer "Aufstelleinheit" soll insbesondere eine Einheit verstanden werden, welche zu einer Kopplung mit der Versorgungseinheit, insbesondere mit dem Versorgungsinduktionselement, vorgesehen ist und welche insbesondere im Zuge der Kopplung mit der Versorgungseinheit in wenigstens einem Betriebszustand Energie von der Versorgungseinheit empfängt und/oder aufnimmt und welche insbesondere in dem Betriebszustand, in welchem die Versorgungseinheit insbesondere Energie an die Aufnahmeeinheit überträgt, auf zumindest einer Aufstellplatte aufgestellt und/oder aufgelegt ist. Die Aufstelleinheit könnte beispielsweise zumindest ein Gargeschirr aufweisen. Alternativ oder zusätzlich könnte die Aufstelleinheit zumindest eine Unterlegvorrichtung aufweisen, welche insbesondere zu einem Aufstellen zumindest eines Gargeschirrs, insbesondere des Gargeschirrs, vorgesehen sein könnte. Die Unterlegeinheit könnte insbesondere zu einer Anordnung zwischen der Aufstellplatte und dem Gargeschirr vorgesehen sein. Vorteilhaft könnte die Aufstelleinheit zumindest eine Gehäuseeinheit aufweisen, welche insbesondere als eine Außengehäuseeinheit ausgebildet sein könnte und insbesondere ein Außengehäuse definieren und/oder ausbilden könnte. Insbesondere könnte zumindest ein Objekt der Aufstelleinheit, insbesondere zumindest ein Aufnahmeinduktionselement und/oder das Aufnahmeversorgungsinduktionselement, wenigstens zu einem Großteil in der Gehäuseeinheit integriert sein. Die, insbesondere als Aufstelleinheit ausgebildete Aufnahmeeinheit ist insbesondere mittels des weiteren Aufnahmeinduktionselements zu einer Kopplung mit der Versorgungseinheit, insbesondere mit dem Versorgungsinduktionselement der Versorgungseinheit, vorgesehen. Beispielsweise könnte die Aufstelleinheit zumindest zwei, vorteilhaft zumindest drei, vorzugsweise zumindest fünf und besonders bevorzugt mehrere weitere Aufnahmeinduktionselemente aufweisen, welche insbesondere jeweils zu einer Kopplung mit der Versorgungseinheit vorgesehen sein könnten. Insbesondere könnte das weitere Aufnahmeinduktionselement zumindest eine Spule, insbesondere zumindest eine Sekundärspule, aufweisen und insbesondere in dem Betriebszustand eine den Aufnahmeraum wenigstens abschnittsweise begrenzenden Wandung mittels wenigstens eines Großteils des weiteren Teils der von dem Versorgungsinduktionselement aufgenommenen Energie beheizen.

Gemäss der Erfindung wird das weitere Aufnahmeinduktionselement in dem Betriebszustand eine den Aufnahmeraum begrenzenden Wandung definiert und als eine den Aufnahmeraum begrenzenden Wandung ausgebildet sein. Unter einem "Aufnahmeraum" soll insbesondere ein räumlicher Bereich verstanden werden, welcher in dem Betriebszustand, in welchem die Versorgungseinheit insbesondere Energie an die Aufnahmeeinheit überträgt, wenigstens teilweise von der Aufnahmeeinheit begrenzt ist und in welchem in dem Betriebszustand insbesondere Lebensmittel angeordnet sein können. Die Lebensmittel könnten insbesondere in fluider, insbesondere flüssiger und/oder wenigstens zu einem Großteil flüssiger, und/oder fester Form in dem Aufnahmeraum angeordnet sein. Dadurch können Lebensmittel insbesondere besonders effizient und/oder gezielt gegart werden, da insbesondere eine zu einer Garung erforderliche Energie präzise übertragen werden kann. Durch die induktive Bereitstellung von Energie kann insbesondere eine umweltschonende Ausgestaltung und/oder eine optimale Temperaturregelung, beispielsweise in einem automatischen thermischen Behandlungsprozess, erzielt werden. Der automatische thermische Behandlungsprozess könnte beispielsweise ein automatischer Garprozess und vorteilhaft ein automatischer Kochprozess sein. Insbesondere könnte, insbesondere aufgrund der optimalen Temperaturregelung, eine optimale Warmhaltefunktion bereitgestellt werden.

Vorteilhaft begrenzen die Aufnahmeeinheit, insbesondere die Gehäuseeinheit der Aufnahmeeinheit, und die Funktionseinheit, insbesondere zumindest eine Funktionsgehäuseeinheit der Funktionseinheit, in dem Betriebszustand den Aufnahmeraum insbesondere wenigstens zu einem Großteil und vorteilhaft vollständig. Der Aufnahmeraum ist insbesondere als ein Lebensmittelaufnahmeraum und/oder vorteilhaft als ein Garraum ausgebildet. Insbesondere weist die Funktionseinheit zumindest eine Funktionsgehäuseeinheit auf, welche insbesondere der Aufnahmeeinheit, insbesondere der Gehäuseeinheit der Aufnahmeeinheit, zuordenbar und vorteilhaft an die Aufnahmeeinheit, insbesondere an die Gehäuseeinheit der Aufnahmeeinheit, angepasst ist. Die Funktionsgehäuseeinheit der Funktionseinheit ist insbesondere als ein Aufstelleinheitendeckel, vorteilhaft als ein Gargeschirrdeckel ausgebildet. Beispielsweise könnte die Funktionseinheit insbesondere wenigstens teilweise und vorteilhaft vollständig gemeinsam mit der Versorgungseinheit und/oder dem weiteren Aufnahmeinduktionselement in dem Aufnahmeraum befindliche Lebensmittel backen und/oder kochen und/oder grillen und/oder sieden und/oder garen und/oder warmhalten. Dadurch kann insbesondere eine effiziente und/oder gleichmäßige, insbesondere thermische, Behandlung, insbesondere Garung, von Lebensmitteln ermöglicht werden, da, insbesondere in einem Vergleich zu einem Backofen, ein kleiner Aufnahmeraum bereitgestellt und dadurch insbesondere eine kurze Aufheizzeit erreicht werden, welche insbesondere mit geringem Energieaufwand erzielt werden kann. Insbesondere in einem Vergleich zu einem Backofen, kann insbesondere eine kompakte Ausgestaltung erzielt werden, bei welcher insbesondere die Aufnahmeeinheit und/oder die Funktionseinheit in zumindest einem Küchenschrank und/oder zumindest einer Küchenschublade gelagert werden können.

Eine besonders hohe Effizienz kann insbesondere erreicht werden durch eine insbesondere als ein Kochfeld und vorteilhaft als ein Induktionskochfeld ausgebildete Versorgungseinheit eines erfindungsgemäßen Induktionsenergieübertragungssystems. Das Induktionsenergieübertragungssystem soll hierbei nicht auf die oben beschriebene Anwendung und Ausführungsform beschränkt sein. Insbesondere kann das Induktionsenergieübertragungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Induktionsenergieübertragungssystem mit einer Versorgungseinheit und mit einer Aufnahmeeinheit in einer schematischen Draufsicht,
- Fig. 2: einen Ausschnitt des Induktionsenergieübertragungssystems mit der Versorgungseinheit, mit der Aufnahmeeinheit und mit einer Funktionseinheit in einer schematischen teilweisen Schnittdarstellung,
- Fig. 3: einen vergrößerten Ausschnitt aus Figur 2 in einer schematischen teilweisen Schnittdarstellung,
- Fig. 4: eine alternative Ausgestaltung zu dem in Figur 3 dargestellten Ausschnitt in einer schematischen teilweisen Schnittdarstellung,
- Fig. 5: eine schematische Darstellung eines elektrischen Aufbaus der in Figur 2 dargestellten Ausgestaltung in einer schematischen Darstellung,
- Fig. 6: einen Ausschnitt des Induktionsenergieübertragungssystems mit der Versorgungseinheit, mit der Aufnahmeeinheit und mit einer weiteren Funktionseinheit in einer schematischen teilweisen Schnittdarstellung,
- Fig. 7: eine schematische Darstellung eines elektrischen Aufbaus der in Figur 6 dargestellten Ausgestaltung in einer schematischen Darstellung,
- Fig. 8: einen Ausschnitt des Induktionsenergieübertragungssystems mit der Versorgungseinheit, mit der Aufnahmeeinheit und mit einer weiteren Funktionseinheit in einer schematischen teilweisen Schnittdarstellung,
- Fig. 9: eine schematische Darstellung eines elektrischen Aufbaus der in Figur 8 dargestellten Ausgestaltung in einer schematischen Darstellung,
- Fig. 10: einen Ausschnitt des Induktionsenergieübertragungssystems mit der Versorgungseinheit, mit der Aufnahmeeinheit und mit einer weiteren Funktionseinheit in einer schematischen teilweisen Schnittdarstellung,
- Fig. 11: eine schematische Darstellung eines elektrischen Aufbaus der in Figur 10 dargestellten Ausgestaltung in einer schematischen Darstellung und
- Fig. 12: einen Ausschnitt eines alternativen Induktionsenergieübertragungssystems mit einer Versorgungseinheit, mit einer Aufnahmeeinheit und mit einer Funktionseinheit in einer schematischen teilweisen Schnittdarstellung.

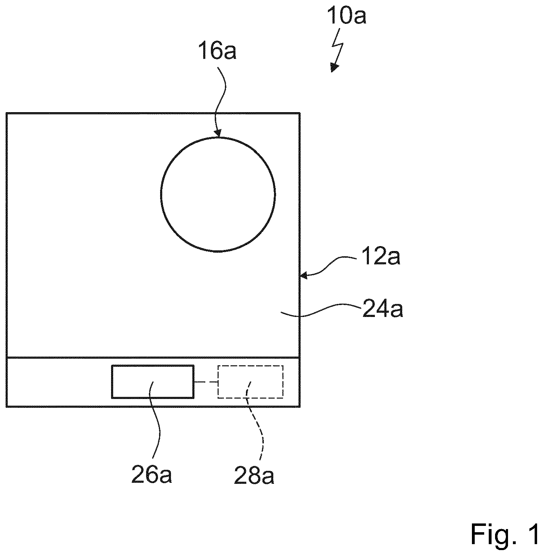

Figur 1 zeigt ein Induktionsenergieübertragungssystem 10a mit zumindest einer Versorgungseinheit 12a und mit zumindest einer Aufnahmeeinheit 16a. Das Induktionsenergieübertragungssystem 10a könnte beispielsweise als ein Induktionswerkzeugmaschinensystem, insbesondere als ein Induktionshandwerkzeugmaschinensystem, ausgebildet sein. Insbesondere ist das Induktionsenergieübertragungssystem 10a insbesondere als ein Induktionsgarsystem ausgebildet. Im vorliegenden Ausführungsbeispiel ist das Induktionsenergieübertragungssystem 10a insbesondere als ein Induktionskochfeldsystem ausgebildet.

Das Induktionsenergieübertragungssystem 10a weist insbesondere zumindest eine und vorteilhaft genau eine Versorgungseinheit 12a, insbesondere zumindest die Versorgungseinheit 12a, auf, welche insbesondere als eine Induktionsversorgungseinheit ausgebildet ist. Die Versorgungseinheit 12a ist insbesondere als ein Kochfeld und vorteilhaft als ein Induktionskochfeld ausgebildet. Die Versorgungseinheit 12a ist insbesondere Teil des Induktionsenergieübertragungssystems 10a.

Die Versorgungseinheit 12a weist insbesondere zumindest eine und vorteilhaft genau eine Aufstellplatte 24a auf. In wenigstens einem montierten Zustand bildet die Aufstellplatte 24a insbesondere eine Sichtfläche aus, welche in dem montierten Zustand insbesondere einem Bediener zugewandt angeordnet ist. Die Aufstellplatte 24a ist insbesondere zu einem Aufstellen der Aufnahmeeinheit 16a, insbesondere zum Zweck einer Beheizung zumindest eines Teils der Aufnahmeeinheit 16a, vorgesehen. Im vorliegenden Ausführungsbeispiel ist die Aufstellplatte 24a insbesondere als eine Kochfeldplatte ausgebildet.

Die Versorgungseinheit 12a weist insbesondere zumindest eine und vorteilhaft genau eine Bedienerschnittstelle 26a, insbesondere zu einer Eingabe und/oder Auswahl von Betriebsparametern, auf, wie beispielsweise einer Heizleistung und/oder einer Heizleistungsdichte und/oder einer Heizzone. Die Bedienerschnittstelle 26a ist insbesondere zu einer Ausgabe eines Werts eines Betriebsparameters an einen Bediener vorgesehen.

Die Versorgungseinheit 12a weist insbesondere zumindest eine und vorteilhaft genau eine Steuereinheit 28a auf. Die Steuereinheit 28a ist insbesondere dazu vorgesehen, in Abhängigkeit von mittels der Bedienerschnittstelle 26a eingegebener Betriebsparameter Aktionen auszuführen und/oder Einstellungen zu verändern. Die Steuereinheit 28a regelt in wenigstens einem Betriebszustand insbesondere eine Energiezufuhr zu zumindest einem Versorgungsinduktionselement 14a der Versorgungseinheit 12a.

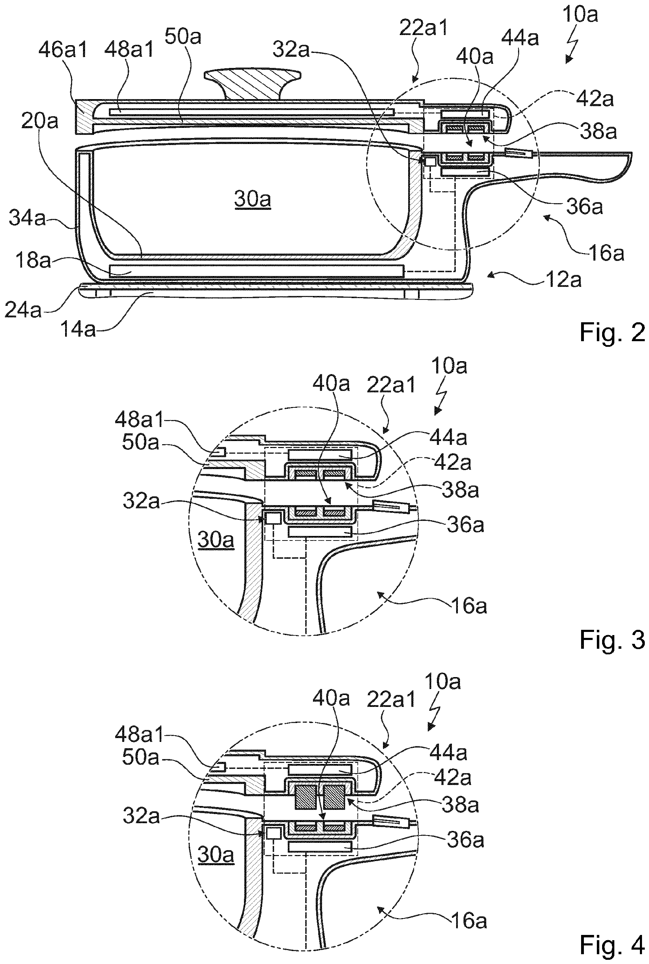

Die Versorgungseinheit 12a weist insbesondere zumindest eine Mehrzahl an und vorteilhaft eine Vielzahl an Versorgungsinduktionselementen 14a auf (vgl. Fig. 2). Die Versorgungsinduktionselemente 14a sind im vorliegenden Ausführungsbeispiel insbesondere in Form einer Matrix angeordnet. Alternativ könnte die Versorgungseinheit 12a beispielsweise eine andere Anzahl an Versorgungsinduktionselementen 14a aufweisen. Die Versorgungsinduktionselemente 14a könnten beispielsweise auf eine von einer Anordnung in Form einer Matrix verschiedene Weise angeordnet sein. Von den Versorgungsinduktionselementen 14a ist in den Figuren lediglich eines dargestellt. Im Folgenden wird lediglich eines der Versorgungsinduktionselemente 14a beschrieben.

Das Versorgungsinduktionselement 14a ist in einer Einbaulage insbesondere unterhalb der Aufstellplatte 24a angeordnet. In dem Betriebszustand stellt das Versorgungsinduktionselement 14a insbesondere induktiv Energie bereit, und zwar insbesondere an zumindest eine Aufnahmeeinheit 16a, vorteilhaft an die Aufnahmeeinheit 16a. Das Versorgungsinduktionselement 14a ist insbesondere als Induktionsheizelement ausgebildet. Insbesondere stellt das Versorgungsinduktionselement 14a in dem Betriebszustand induktiv Energie zu einer Beheizung zumindest eines Teils der Aufnahmeeinheit 16a bereit.

Das Induktionsenergieübertragungssystem 10a weist insbesondere zumindest eine und vorteilhaft genau eine Aufnahmeeinheit 16a, insbesondere zumindest die Aufnahmeeinheit 16a, auf. Die Aufnahmeeinheit 16a empfängt in dem Betriebszustand insbesondere wenigstens einen Großteil der von dem Versorgungsinduktionselement 14a bereitgestellten Energie. Im vorliegenden Ausführungsbeispiel ist die Aufnahmeeinheit 16a insbesondere als eine Aufstelleinheit ausgebildet. Die, insbesondere als Aufstelleinheit ausgebildete, Aufnahmeeinheit 16a weist insbesondere einen Aufnahmeraum 30a zu einer Aufnahme von Lebensmitteln auf und begrenzt den Aufnahmeraum 30a insbesondere wenigstens teilweise.

Im vorliegenden Ausführungsbeispiel weist die Aufnahmeeinheit 16a insbesondere zumindest eine und vorteilhaft genau eine Gehäuseeinheit 34a auf. Die Gehäuseeinheit 34a ist insbesondere als eine Außengehäuseeinheit ausgebildet und bildet in dem Betriebszustand insbesondere ein Außengehäuse der Aufnahmeeinheit 16a aus.

Die Aufnahmeeinheit 16a weist im vorliegenden Ausführungsbeispiel insbesondere zumindest ein und vorteilhaft genau ein Aufnahmeinduktionselement 18a auf. Alternativ könnte die Aufnahmeeinheit 16a insbesondere eine größere Anzahl an Aufnahmeinduktionselementen 18a aufweisen, wie beispielsweise zumindest zwei, insbesondere zumindest drei, vorteilhaft zumindest fünf und vorzugsweise mehrere Aufnahmeinduktionselemente 18a.

In dem Betriebszustand empfängt das Aufnahmeinduktionselement 18a insbesondere wenigstens einen Teil der von dem Versorgungsinduktionselement 18a bereitgestellten Energie. Das Aufnahmeinduktionselement 18a ist insbesondere zu einer Aufnahme des Teils der von dem Versorgungsinduktionselement 14a bereitgestellten Energie vorgesehen. Das Aufnahmeinduktionselement 18a ist insbesondere wenigstens zu einem Großteil innerhalb der Gehäuseeinheit 34a integriert.

In dem Betriebszustand transferiert das Aufnahmeinduktionselement 18a insbesondere wenigstens einen Großteil der aufgenommenen Energie in elektrische Energie. Das Aufnahmeinduktionselement 18a weist insbesondere zumindest eine Spule, insbesondere zumindest eine Sekundärspule, auf und ist insbesondere als Spule, insbesondere als Sekundärspule, ausgebildet.

Insbesondere zusätzlich zu dem Aufnahmeinduktionselement 18a, weist die Aufnahmeeinheit 16a insbesondere zumindest ein und vorteilhaft genau ein weiteres Aufnahmeinduktionselement 20a auf. Alternativ könnte die Aufnahmeeinheit 16a insbesondere eine größere Anzahl an weiteren Aufnahmeinduktionselementen 20a aufweisen, wie beispielsweise zumindest zwei, insbesondere zumindest drei, vorteilhaft zumindest fünf und vorzugsweise mehrere weitere Aufnahmeinduktionselemente 20a.

In dem Betriebszustand empfängt das weitere Aufnahmeinduktionselement 20a insbesondere wenigstens teilweise zeitgleich wenigstens einen weiteren Teil der von dem Versorgungsinduktionselement 14a bereitgestellten Energie. Das weitere Aufnahmeinduktionselement 20a ist insbesondere zu einer Aufnahme des weiteren Teils der von dem Versorgungsinduktionselement 14a bereitgestellten Energie vorgesehen. Das weitere Aufnahmeinduktionselement 20a ist insbesondere wenigstens zu einem Großteil innerhalb einstückig mit der Gehäuseeinheit 34a ausgebildet.

In dem Betriebszustand transferiert das weitere Aufnahmeinduktionselement 20a insbesondere wenigstens einen Großteil der aufgenommenen Energie in thermische Energie. Das weitere Aufnahmeinduktionselement 20a ist insbesondere als eine den Aufnahmeraum 30a zumindest abschnittsweise begrenzende Wandung, insbesondere der Gehäuseeinheit 34a, ausgebildet. Das weitere Aufnahmeinduktionselement 20a besteht insbesondere wenigstens zu einem Großteil aus zumindest einem ferromagnetischen Material und/oder aus zumindest einem ferrimagnetischen Material. Vorteilhaft sind das Aufnahmeinduktionselement 18a und das weitere Aufnahmeinduktionselement 20a typverschieden.

Das weitere Aufnahmeinduktionselement 20a beheizt in dem Betriebszustand mittels wenigstens eines Großteils der thermischen Energie insbesondere zumindest ein in dem Aufnahmeraum 30a befindliches Lebensmittel. In dem Betriebszustand stellt das Aufnahmeinduktionselement 18a wenigstens einen Großteil der elektrischen Energie zu einer Energieversorgung, insbesondere zumindest einer Funktionseinheit 22a, bereit.

Das Induktionsenergieübertragungssystem 10a weist insbesondere zumindest eine Funktionseinheit 22a, vorteilhaft zumindest die Funktionseinheit 22a, auf. Beispielsweise könnte das Induktionsenergieübertragungssystem 10a genau eine, insbesondere einzige, Funktionseinheit 22a aufweisen. Im vorliegenden Ausführungsbeispiel weist das Induktionsenergieübertragungssystem 10a insbesondere zumindest zwei, vorteilhaft zumindest drei und vorzugsweise zumindest vier Funktionseinheiten 22a auf (vgl. Figuren 2 bis 10).

Von den Funktionseinheiten 22a wird im Folgenden zunächst lediglich eine beschrieben, bevor im Zusammenhang mit den Figuren 2 bis 11 auf jeder der, insbesondere verschiedenen, Funktionseinheiten 22a einzeln eingegangen werden soll.

Die Funktionseinheit 22a ist in dem Betriebszustand insbesondere durch das Aufnahmeinduktionselement 18a mit elektrischer Energie versorgt. Insbesondere stellt das Aufnahmeinduktionselement 18a in dem Betriebszustand wenigstens einen Großteil der elektrischen Energie zu einer Energieversorgung, insbesondere der Funktionseinheit 22a, bereit.

In dem Betriebszustand ist die Funktionseinheit 22a insbesondere separierbar mit der Aufnahmeeinheit 16a gekoppelt. Insbesondere ist die Funktionseinheit 22a zu einer separierbaren Kopplung mit der Aufnahmeeinheit 16a vorgesehen (vgl. Figuren 2 bis 4).

Insbesondere weist die Funktionseinheit 22a zumindest eine und vorteilhaft genau eine Funktionskoppeleinheit 38a auf. Die Aufnahmeeinheit 16a weist insbesondere zumindest eine und vorteilhaft genau eine Aufnahmekoppeleinheit 40a auf. In dem Betriebszustand sind die Funktionseinheit 22a und die Aufnahmeeinheit 16a insbesondere mittels einer Kopplung zwischen der Funktionskoppeleinheit 38a und der Aufnahmekoppeleinheit 40a miteinander gekoppelt.

Insbesondere weist die Funktionseinheit 22a zumindest eine und vorteilhaft genau eine Funktionsgehäuseeinheit 46a auf. Die Funktionskoppeleinheit 38a ist in dem Betriebszustand insbesondere wenigstens zu einem Großteil und vorteilhaft vollständig in der Funktionsgehäuseeinheit 46a integriert.

Im vorliegenden Ausführungsbeispiel ist die Funktionseinheit 22a insbesondere zu einer kontaktlosen separierbaren Kopplung mit der Aufnahmeeinheit 16a vorgesehen (vgl.

Figuren 2 und 3). Beispielsweise könnte die Funktionseinheit 22a in dem Betriebszustand mittels zumindest einer magnetischen Kopplung mit der Aufnahmeeinheit 16a gekoppelt sein.

In einem alternativen Ausführungsbeispiel könnte die Funktionseinheit 22a insbesondere zu einer durch Formschluss und/oder Kraftschluss hervorgerufenen, separierbaren Kopplung mit der Aufnahmeeinheit 16a vorgesehen sein (vgl. Figur 4). Beispielsweise könnte die Funktionseinheit 22a in dem Betriebszustand mittels zumindest einer durch zumindest eine Steckverbindung hervorgerufenen Kopplung mit der Aufnahmeeinheit 16a gekoppelt sein. Alternativ oder zusätzlich könnte die Funktionseinheit 22a in dem Betriebszustand insbesondere mittels zumindest einer durch zumindest eine Rastverbindung hervorgerufenen Kopplung und/oder mittels zumindest einer durch zumindest eine Verriegelungsverbindung hervorgerufenen Kopplung und/oder mittels zumindest einer durch zumindest eine Klemmverbindung hervorgerufenen Kopplung mit der Aufnahmeeinheit 16a gekoppelt sein (nicht dargestellt).

Insbesondere unabhängig von einer Art der Kopplung der Funktionseinheit 22a mit der Aufnahmeeinheit 16a, ist die Funktionseinheit 22a in dem Betriebszustand insbesondere wenigstens zu einem Großteil auf einer der Versorgungseinheit 12a abgewandten Seite der Aufnahmeeinheit 16a mit der Aufnahmeeinheit 16a gekoppelt (vgl. Figur 2).

Das Induktionsenergieübertragungssystem 10a weist insbesondere zumindest eine und vorteilhaft genau eine Sicherheitseinheit 32a auf (vgl. Figuren 2 bis 4). In dem Betriebszustand überprüft die Sicherheitseinheit 32a insbesondere zumindest eine Positionierung der Funktionseinheit 22a an der Aufnahmeeinheit 16a. Die Sicherheitseinheit 32a leitet in dem Betriebszustand insbesondere in Abhängigkeit der Überprüfung zumindest eine Aktion ein. Insbesondere stoppt und/oder blockiert die Sicherheitseinheit 32a in dem Betriebszustand eine Energiebereitstellung an die Funktionseinheit 22a in Abhängigkeit der Überprüfung im Fall, dass die Sicherheitseinheit 32a bei der Überprüfung eine fehlerhafte Positionierung der Funktionseinheit 22a an der Aufnahmeeinheit 16a feststellt.

Insbesondere zu der Energiebereitstellung an die Funktionseinheit 22a, weist die Aufnahmeeinheit 16a insbesondere zumindest ein und vorteilhaft genau ein Aufnahmeversorgungsinduktionselement 36a auf. In dem Betriebszustand stellt das Aufnahmeversorgungsinduktionselement 36a insbesondere induktiv Energie zu der Energieversorgung der Funktionseinheit 22a bereit.

Insbesondere weist die Funktionseinheit 22a zumindest ein und vorteilhaft genau ein Funktionsaufnahmeinduktionselement 44a auf, welches insbesondere in dem Betriebszustand wenigstens einen Teil der von dem

Aufnahmeversorgungsinduktionselement 36a bereitgestellten Energie empfängt. Insbesondere zu der Energieaufnahme von dem Aufnahmeversorgungsinduktionselement 36a, weist das Funktionsaufnahmeinduktionselement 44a insbesondere zumindest eine Spule auf und ist insbesondere als Spule ausgebildet.

Das Aufnahmeinduktionselement 18a und das Aufnahmeversorgungsinduktionselement 36a sind insbesondere elektrisch, vorteilhaft mittels zumindest einer elektrischen Verbindung und besonders vorteilhaft mittels zumindest einer elektrischen Kabelverbindung, miteinander verbunden. Insbesondere zu der Energiebereitstellung an die Funktionseinheit 22a, weist das Aufnahmeversorgungsinduktionselement 36a insbesondere zumindest eine Spule auf und ist insbesondere als Spule ausgebildet.

Die Sicherheitseinheit 32a deaktiviert in dem Betriebszustand insbesondere im Fall einer fehlerhaften Positionierung der Funktionseinheit 22a an der Aufnahmeeinheit 16a das Aufnahmeversorgungsinduktionselement 36a. Beispielsweise könnte die Sicherheitseinheit 32a in dem Betriebszustand im Fall einer fehlerhaften Positionierung der Funktionseinheit 22a an der Aufnahmeeinheit 16a das Aufnahmeversorgungsinduktionselement 36a durch Betätigung zumindest eines elektrischen Schaltelements, welches insbesondere in der elektrischen Verbindung zwischen dem Aufnahmeversorgungsinduktionselement 36a und dem Aufnahmeinduktionselement 18a angeordnet sein könnte, deaktivieren.

Im vorliegenden Ausführungsbeispiel ist die Funktionseinheit 22a in dem Betriebszustand insbesondere zu einer Behandlung zumindest eines, insbesondere in dem Aufnahmeraum 30a befindlichen, Lebensmittels vorgesehen. In dem Betriebszustand behandelt die Funktionseinheit 22a insbesondere zumindest ein, insbesondere in dem Aufnahmeraum 30a befindliches, Lebensmittel.

Die Funktionseinheit 22a könnte in einem alternativen Ausführungsbeispiel in wenigstens einem Betriebszustand beispielsweise zu einer, insbesondere thermischen und/oder mechanischen, Bearbeitung zumindest eines Objekts und/oder zumindest eines Werkstücks vorgesehen sein, beispielsweise mittels zumindest einer Bearbeitungsfunktion.

Im Folgenden werden anhand der Figuren 2 bis 10 verschiedene Ausgestaltungen der Funktionseinheit 22a beschrieben. In den genannten Figuren ist der Übersichtlichkeit halber jeweils lediglich eine Schnittstelleneinheit 42a dargestellt, welche insbesondere zumindest die Funktionskoppeleinheit 38a und insbesondere zumindest die Aufnahmekoppeleinheit 40a und insbesondere zumindest das Aufnahmeversorgungsinduktionselement 36a und insbesondere zumindest das Funktionsaufnahmeinduktionselement 44a und insbesondere zumindest die Sicherheitseinheit 32a aufweist.

Eine in den Figuren 2 bis 5 dargestellte Funktionseinheit 22a1 wird im Folgenden als induktive Funktionseinheit 22a1 bezeichnet. Die, insbesondere induktive, Funktionseinheit 22a1 weist insbesondere zumindest ein und vorteilhaft genau ein

Funktionsversorgungsinduktionselement 48a1 auf. In dem Betriebszustand stellt das Funktionsversorgungsinduktionselement 48a1 insbesondere induktiv Energie bereit.

Insbesondere ist das Funktionsversorgungsinduktionselement 48a1 als ein Induktionsheizelement ausgebildet. Die, insbesondere induktive, Funktionseinheit 22a1 ist in dem Betriebszustand, insbesondere mittels des

Funktionsversorgungsinduktionselements 48a1, insbesondere zu einer thermischen Behandlung zumindest eines, insbesondere in dem Aufnahmeraum 30a befindlichen, Lebensmittels vorgesehen. Das Funktionsversorgungsinduktionselement 48a1 und das Funktionsaufnahmeinduktionselement 44a sind insbesondere elektrisch miteinander verbunden, und zwar vorteilhaft mittels einer Reihenschaltung.

Insbesondere weist die, insbesondere induktive, Funktionseinheit 22a1 zumindest ein und vorteilhaft genau ein weiteres Funktionsaufnahmeinduktionselement 50a auf, welches insbesondere in dem Betriebszustand wenigstens einen Teil und vorteilhaft wenigstens einen Großteil der von dem Funktionsversorgungsinduktionselement 48a1 bereitgestellten Energie empfängt und insbesondere wenigstens einen Großteil der aufgenommenen Energie in thermische Energie transferiert. Insbesondere ist das weitere Funktionsaufnahmeinduktionselement 50a einstückig mit der Funktionsgehäuseeinheit 46a ausgebildet. In dem Betriebszustand bildet das weitere Funktionsaufnahmeinduktionselement 50a insbesondere zumindest eine den Aufnahmeraum 30a wenigstens teilweise begrenzende Wandung aus.

Die Funktionsgehäuseeinheit 46a der, insbesondere induktiven, Funktionseinheit 22a1 ist insbesondere als ein Deckel ausgebildet und begrenzt insbesondere gemeinsam mit der Aufnahmeeinheit 16a den Aufnahmeraum 30a in dem Betriebszustand wenigstens zu einem Großteil und vorteilhaft vollständig.

Insbesondere in einem Vergleich zu einem als Widerstandsheizelement ausgebildeten Funktionsversorgungsinduktionselement 48a1, kann insbesondere eine effiziente und/oder gezielte und/oder direkte Energieübertragung an das weitere Funktionsaufnahmeinduktionselement 50a ermöglicht werden, und zwar insbesondere unter Vermeidung von, insbesondere thermischen, parasitären Kapazitäten, welche beispielsweise durch eine geringe Kontaktfläche des Widerstandsheizelements mit einer Umgebung hervorgerufen sein könnten. Es kann insbesondere eine geringe Aufheizzeit und/oder eine geringe zu einem Aufheizen notwendige Leistung erreicht werden. Beispielsweise könnte, insbesondere zusätzlich, zumindest eine thermische Isolation zwischen dem Funktionsversorgungsinduktionselement 48a1 und einer Umgebung vorgesehen sein, wodurch insbesondere eine verstärkte elektrische Isolation bereitgestellt werden könnte.

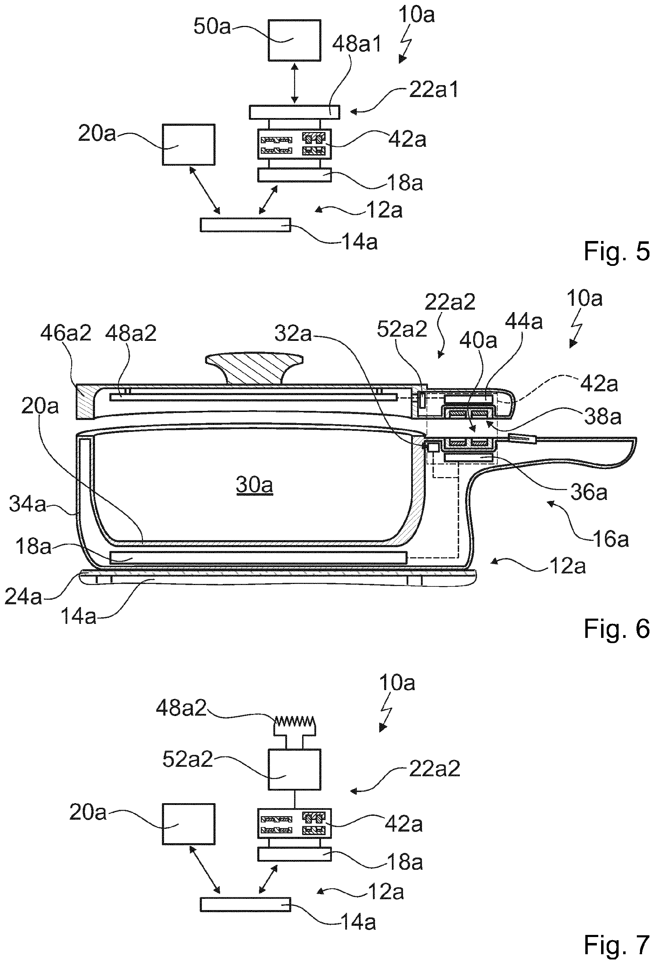

In den Figuren 6 und 7 ist insbesondere eine Funktionseinheit 22a2 dargestellt, welche insbesondere im Folgenden als resistive Funktionseinheit 22a2 bezeichnet wird. Die, insbesondere induktive, Funktionseinheit 22a1 und die, insbesondere resistive, Funktionseinheit 22a2 unterscheiden sich insbesondere zumindest in einer Ausgestaltung eines Funktionsversorgungsinduktionselements 48a.

Die, insbesondere resistive, Funktionseinheit 22a2 weist insbesondere zumindest ein und vorteilhaft genau ein Funktionsversorgungsinduktionselement 48a2 auf. In dem Betriebszustand stellt das Funktionsversorgungsinduktionselement 48a2 insbesondere resistiv Energie bereit. Insbesondere ist das Funktionsversorgungsinduktionselement 48a2 als ein Widerstandsheizelement ausgebildet. Die, insbesondere resistive, Funktionseinheit 22a2 ist in dem Betriebszustand, insbesondere mittels des Funktionsversorgungsinduktionselements 48a2, insbesondere zu einer thermischen Behandlung zumindest eines, insbesondere in dem Aufnahmeraum 30a befindlichen, Lebensmittels vorgesehen.

Insbesondere weist die, insbesondere resistive, Funktionseinheit 22a2 zumindest eine und vorteilhaft genau eine Wandlereinheit 52a2 auf. Die Wandlereinheit 52a2 ist insbesondere als ein AC-DC-Wandler ausgebildet. Insbesondere ist die Wandlereinheit 52a2 elektrisch zwischen dem Funktionsversorgungsinduktionselement 48a2 und dem Funktionsaufnahmeinduktionselement 44a geschaltet.

Im vorliegenden Ausführungsbeispiel ist die, insbesondere resistive, Funktionseinheit 22a2 frei von weiteren Funktionsaufnahmeinduktionselementen. Alternativ könnte die, insbesondere resistive, Funktionseinheit 22a2, insbesondere analog zu der, insbesondere induktiven, Funktionseinheit 22a1, zumindest ein und vorteilhaft genau ein weiteres Funktionsaufnahmeinduktionselement aufweisen (nicht dargestellt).

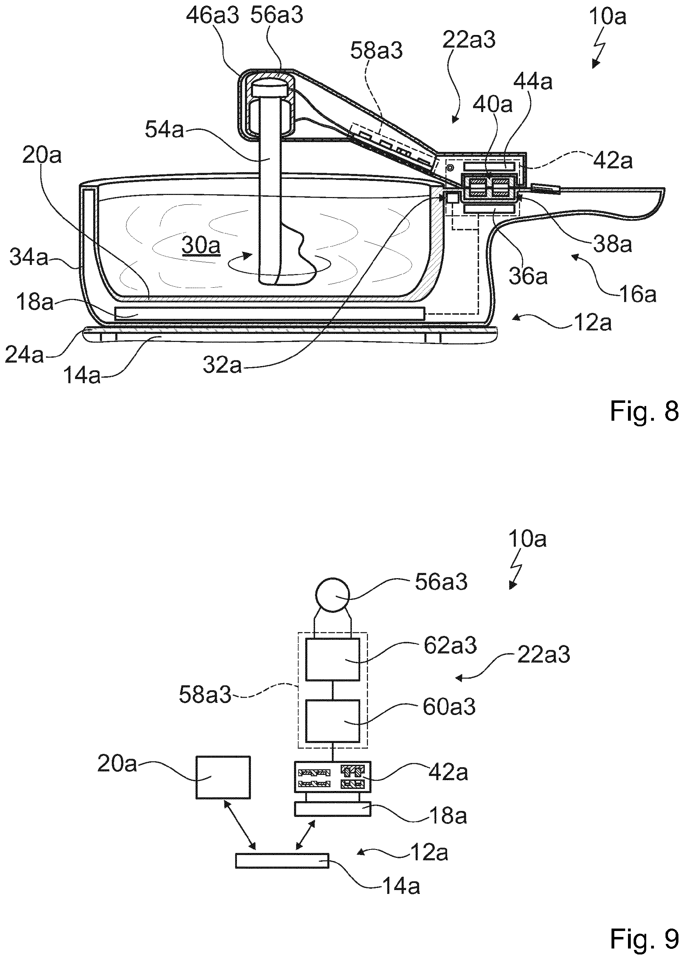

In den Figuren 8 und 9 ist insbesondere eine Funktionseinheit 22a3 dargestellt, welche insbesondere im Folgenden als mechanische Funktionseinheit 22a3 bezeichnet wird. Die, insbesondere mechanische, Funktionseinheit 22a3 weist insbesondere zumindest ein und vorteilhaft genau ein Behandlungswerkzeug 54a auf, welches insbesondere als ein Bearbeitungswerkzeug ausgebildet ist. Das Behandlungswerkzeug 54a ist insbesondere zu einer mechanischen Bearbeitung zumindest eines in dem Aufnahmeraum 30a befindlichen Lebensmittels vorgesehen. Die, insbesondere mechanische, Funktionseinheit 22a3 ist in dem Betriebszustand, insbesondere mittels des Behandlungswerkzeugs 54a, insbesondere zu einer mechanischen Behandlung zumindest eines, insbesondere in dem Aufnahmeraum 30a befindlichen, Lebensmittels vorgesehen.

Im vorliegenden Ausführungsbeispiel ist das Behandlungswerkzeug 54a als ein Rührwerkzeug ausgebildet. Alternativ oder zusätzlich könnte das Behandlungswerkzeug 54a beispielsweise als ein Mixwerkzeug und/oder als ein Knetwerkzeug und/oder als ein Schneidwerkzeug ausgebildet sein.

Insbesondere ist das Behandlungswerkzeug 54a wenigstens teilweise innerhalb des Aufnahmeraums 30a angeordnet. Insbesondere ragt das Behandlungswerkzeug 54a aus der Funktionsgehäuseeinheit 46a der, insbesondere mechanischen, Funktionseinheit 22a3 heraus und in den Aufnahmeraum 30a hinein.

Die, insbesondere mechanische, Funktionseinheit 22a3 weist insbesondere zumindest eine und vorteilhaft genau eine Antriebseinheit 56a3 auf, welche in dem Betriebszustand insbesondere zu einem Antrieb des Behandlungswerkzeugs 54a vorgesehen ist. In dem Betriebszustand ist die Antriebseinheit 56a3 insbesondere in der Funktionsgehäuseeinheit 46a integriert.

Die, insbesondere mechanische, Funktionseinheit 22a3 weist insbesondere zumindest eine und vorteilhaft genau eine Elektronikeinheit 58a3 auf, welche in dem Betriebszustand insbesondere zu einer Steuerung und/oder Regelung der Antriebseinheit 56a3 und/oder zu einer Bereitstellung von Energie an die Antriebseinheit 56a3 vorgesehen ist. Insbesondere ist die Elektronikeinheit 58a3 elektrisch zwischen dem Funktionsversorgungsinduktionselement 48a3 und der Antriebseinheit 56a3 geschaltet.

Im vorliegenden Ausführungsbeispiel weist die Elektronikeinheit 58a3 insbesondere zumindest einen Gleichrichter 60a und insbesondere zumindest einen Wechselrichter 62a auf. Insbesondere weist die Antriebseinheit 56a3 zumindest einen Elektromotor auf, welcher insbesondere als ein Wechselstrommotor ausgebildet ist. Alternativ könnte die Antriebseinheit 56a3 insbesondere zumindest einen Elektromotor aufweisen, welcher insbesondere als ein Gleichstrommotor ausgebildet sein könnte, wodurch insbesondere auf einen Wechselrichter verzichten werden könnte.

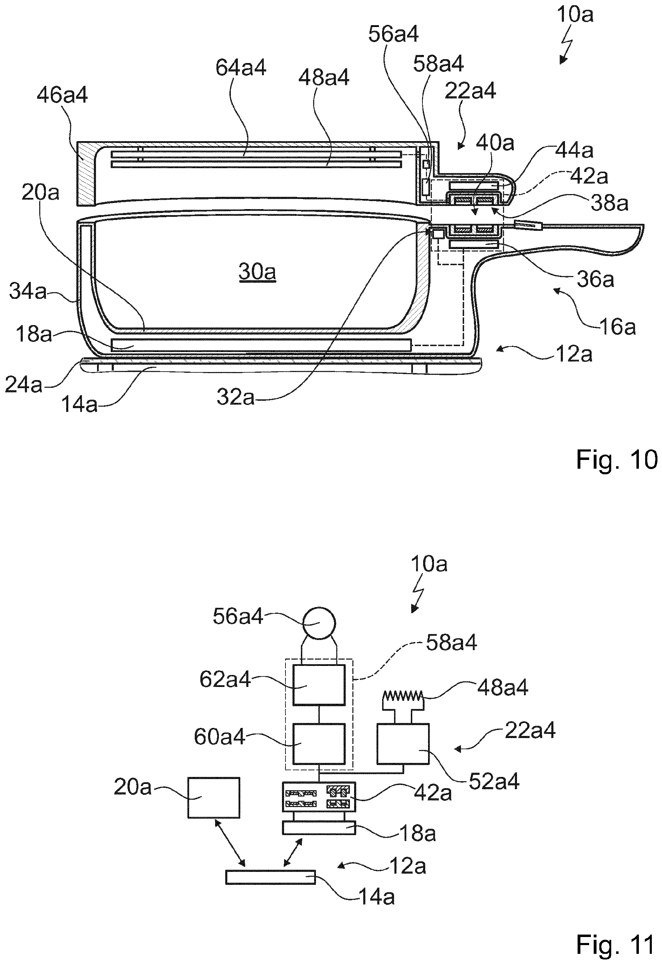

In den Figuren 10 und 11 ist insbesondere eine Funktionseinheit 22a4 dargestellt, welche insbesondere im Folgenden als kombinierte Funktionseinheit 22a4 bezeichnet wird. Die, insbesondere kombinierte, Funktionseinheit 22a4 ist in dem Betriebszustand insbesondere zu einer thermischen Behandlung zumindest eines, insbesondere in dem Aufnahmeraum 30a befindlichen, Lebensmittels vorgesehen, und zwar insbesondere mittels zumindest eines, insbesondere als Widerstandsheizelement ausgebildeten, Funktionsversorgungsinduktionselements 48a4. In Bezug auf die thermische Behandlung ist die, insbesondere kombinierte, Funktionseinheit 22a4 insbesondere analog zu der, insbesondere resistiven, Funktionseinheit 22a2 aufgebaut.

Insbesondere analog zu der, insbesondere mechanischen, Funktionseinheit 22a3, weist die, insbesondere kombinierte, Funktionseinheit 22a4 insbesondere zumindest eine Elektronikeinheit 58a4 und insbesondere zumindest eine Antriebseinheit 56a4 auf. Die, insbesondere kombinierte, Funktionseinheit 22a4 weist insbesondere zumindest eine Gebläseeinheit 64a4 auf. In dem Betriebszustand ist die Antriebseinheit 56a4 insbesondere zu einem Antrieb der Gebläseeinheit 64a4 vorgesehen.

Die, insbesondere kombinierte, Funktionseinheit 22a4 und die Aufnahmeeinheit 16a bilden in dem Betriebszustand insbesondere eine Heißluft-Fritteuse aus. Insbesondere im Vergleich zu bekannten Heißluft-Fritteusen, kann die Aufnahmeeinheit 16a insbesondere mittels des Versorgungsinduktionselements 14a und des weiteren Aufnahmeinduktionselements 20a vorgeheizt werden, wodurch insbesondere eine kurze Aufheizzeit und/oder eine kurze Garzeit und/oder eine geringe Energieaufnahme des Funktionsversorgungsinduktionselements 48a4 ermöglicht werden kann. Die Aufnahmeeinheit 16a kann insbesondere zusätzlich zu einem, insbesondere gewöhnlichen, Kochprozess verwendet werden.

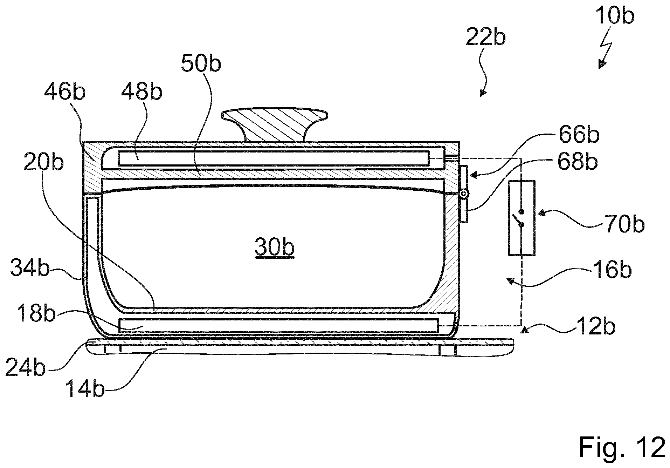

In der Figur 12 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 11 verwiesen werden kann. Zur Unterscheidung der Ausführungsbeispiele ist der Buchstabe a in den Bezugszeichen des Ausführungsbeispiels in den Figuren 1 bis 11 durch den Buchstaben b in den Bezugszeichen des Ausführungsbeispiels der Figur 12 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 11 verwiesen werden.

Figur 12 zeigt insbesondere ein alternatives Induktionsenergieübertragungssystem 10b mit einer, insbesondere als Induktionskochfeld ausgebildeten, Versorgungseinheit 12b und mit einer, insbesondere als Aufstelleinheit ausgebildeten, Aufnahmeeinheit 16b. Die Aufnahmeeinheit 16b ist insbesondere mit einer Funktionseinheit 22b, insbesondere des Induktionsenergieübertragungssystems 10b, gekoppelt. Insbesondere weist das Induktionsenergieübertragungssystem 10b zumindest eine Lageeinheit 66b auf, welche insbesondere die Funktionseinheit 22b beweglich und insbesondere schwenkbar relativ zu der Aufnahmeeinheit 16b an der Aufnahmeeinheit 16b lagert. Im vorliegenden Ausführungsbeispiel weist die Lagereinheit 66b beispielsweise eine Scharniereinheit 68b auf.

Die Funktionseinheit 22b ist in dem Betriebszustand insbesondere zu einer thermischen Behandlung zumindest eines, insbesondere in einem Aufnahmeraum 30b befindlichen, Lebensmittels vorgesehen.

Insbesondere weist das Induktionsenergieübertragungssystem 10b zumindest eine elektrische Versorgungseinheit 70b auf, welche in dem Betriebszustand insbesondere eine Energieversorgung eines Funktionsversorgungsinduktionselements 48b der Funktionseinheit 22b steuert und/oder regelt. Insbesondere ist die Versorgungseinheit 70b elektrisch zwischen dem Funktionsversorgungsinduktionselement 48b und einem Aufnahmeinduktionselement 18b der Aufnahmeeinheit 16b geschaltet.

### Bezugszeichen

- 10: Induktionsenergieübertragungssystem
- 12: Versorgungseinheit
- 14: Versorgungsinduktionselement
- 16: Aufnahmeeinheit
- 18: Aufnahmeinduktionselement
- 20: Weiteres Aufnahmeinduktionselement
- 22: Funktionseinheit
- 24: Aufstellplatte
- 26: Bedienerschnittstelle
- 28: Steuereinheit
- 30: Aufnahmeraum
- 32: Sicherheitseinheit
- 34: Gehäuseeinheit
- 36: Aufnahmeversorgungsinduktionselement
- 38: Funktionskoppeleinheit
- 40: Aufnahmekoppeleinheit
- 42: Schnittstelleneinheit
- 44: Funktionsaufnahmeinduktionselement
- 46: Funktionsgehäuseeinheit
- 48: Funktionsversorgungsinduktionselement
- 50: Funktionsaufnahmeinduktionselement
- 52: Wandlereinheit
- 54: Behandlungswerkzeug
- 56: Antriebseinheit
- 58: Elektronikeinheit
- 60: Gleichrichter
- 62: Wechselrichter
- 64: Gebläseeinheit
- 66: Lagereinheit
- 68: Scharniereinheit
- 70: Versorgungseinheit

## Patentansprüche

1. Induktionsenergieübertragungssystem, insbesondere Induktionsgarsystem, mit zumindest einer Versorgungseinheit (12a-b), welche zumindest ein Versorgungsinduktionselement (14a-b) aufweist, das in wenigstens einem Betriebszustand induktiv Energie bereitstellt, und mit zumindest einer Aufnahmeeinheit (16a-b), welche zumindest ein Aufnahmeinduktionselement (18a-b), das in dem Betriebszustand wenigstens einen Teil der von dem Versorgungsinduktionselement (14ab) bereitgestellten Energie empfängt und wenigstens einen Großteil der aufgenommenen Energie in elektrische Energie transferiert, und zumindest ein weiteres Aufnahmeinduktionselement (20a-b) aufweist, das in dem Betriebszustand wenigstens teilweise zeitgleich wenigstens einen weiteren Teil der von dem Versorgungsinduktionselement (14a-b) bereitgestellten Energie empfängt und wenigstens einen Großteil der aufgenommenen Energie in thermische Energie transferiert, wobei die Aufnahmeeinheit (16a-b) als eine Aufstelleinheit ausgebildet ist, welche zumindest einen Aufnahmeraum (30a-b) zu einer Aufnahme von Lebensmitteln aufweist, **dadurch gekennzeichnet, dass** das weitere Aufnahmeinduktionselement (20a-b) in dem Betriebszustand als eine den Aufnahmeraum (30a-b) wenigstens abschnittsweise begrenzende Wandung ausgebildet ist.

2. Induktionsenergieübertragungssystem nach Anspruch 1, **dadurch gekennzeichnet, dass** das Aufnahmeinduktionselement (18a-b) und das weitere Aufnahmeinduktionselement (20a-b) typverschieden sind.

3. Induktionsenergieübertragungssystem nach Anspruch 1 oder 2, **gekennzeichnet durch** zumindest eine Funktionseinheit (22a-b), welcher das Aufnahmeinduktionselement (18a-b) in dem Betriebszustand wenigstens einen Großteil der elektrischen Energie zu einer Energieversorgung bereitstellt.

4. Induktionsenergieübertragungssystem nach Anspruch 3, **dadurch gekennzeichnet, dass** die Funktionseinheit (22a) zu einer separierbaren Kopplung mit der Aufnahmeeinheit (16a) vorgesehen ist.

5. Induktionsenergieübertragungssystem nach Anspruch 3 oder 4, **dadurch gekennzeichnet, dass** die Funktionseinheit (22a-b) in dem Betriebszustand wenigstens zu einem Großteil auf einer der Versorgungseinheit (12a-b) abgewandten Seite der Aufnahmeeinheit (16a-b) mit der Aufnahmeeinheit (16a-b) gekoppelt ist.

6. Induktionsenergieübertragungssystem nach einem der Ansprüche 3 bis 5, **gekennzeichnet durch** zumindest eine Sicherheitseinheit (32a-b), welche in dem Betriebszustand zumindest eine Positionierung der Funktionseinheit (22a-b) an der Aufnahmeeinheit (16a-b) überprüft und in Abhängigkeit der Überprüfung zumindest eine Aktion einleitet.

7. Induktionsenergieübertragungssystem nach einem der Ansprüche 3 bis 6, **dadurch gekennzeichnet, dass** die Aufnahmeeinheit (16a-b) zumindest ein Aufnahmeversorgungsinduktionselement (36a-b) aufweist, welches in dem Betriebszustand induktiv Energie zu der Energieversorgung der Funktionseinheit (22a-b) bereitstellt.

8. Induktionsenergieübertragungssystem nach den Ansprüchen 6 und 7, **dadurch gekennzeichnet, dass** die Sicherheitseinheit (32a-b) in dem Betriebszustand im Fall einer fehlerhaften Positionierung der Funktionseinheit (22a-b) an der Aufnahmeeinheit (16a-b) das Aufnahmeversorgungsinduktionselement (36a-b) deaktiviert.

9. Induktionsenergieübertragungssystem nach einem der Ansprüche 3 bis 8, **dadurch gekennzeichnet, dass** die Funktionseinheit (22a-b) in dem Betriebszustand zu einer Behandlung zumindest eines Lebensmittels vorgesehen ist.

10. Induktionsenergieübertragungssystem nach Anspruch 9, **dadurch gekennzeichnet, dass** die Funktionseinheit (22a-b) in dem Betriebszustand zu einer thermischen Behandlung zumindest eines Lebensmittels vorgesehen ist.

11. Induktionsenergieübertragungssystem nach Anspruch 9 oder 10, **dadurch gekennzeichnet, dass** die Funktionseinheit (22a) in dem Betriebszustand zu einer mechanischen Behandlung zumindest eines Lebensmittels vorgesehen ist.

12. Induktionsenergieübertragungssystem nach einem der vorhergehenden Ansprüche, **dadurch gekennzeichnet, dass** die Versorgungseinheit (12a-b) als ein Kochfeld ausgebildet ist.

## Claims

1. Induction energy transmission system, in particular induction cooking system, having at least one supply unit (12a-b) that has at least one supply induction element (14a-b) that provides inductive energy in at least one operating state and having at least one receiving unit (16a-b) that has at least one receiving induction element (18a-b) that in the operating state receives at least a part of the energy that is provided by the supply induction element (14a-b) and transfers at least a large proportion of the received energy into electrical energy, and has at least one further receiving induction element (20a-b) that in the operating state, at least in part simultaneously, receives at least a further part of the energy that is provided by the supply induction element (14a-b) and transfers at least a large proportion of the received energy into thermal energy, wherein the receiving unit (16a-b) is designed as a placement unit that has at least one receiving space (30a-b) for receiving items of food, **characterised in that** in the operating state the further receiving induction element (20a-b) is designed as a wall that at least in sections delimits the receiving space (30a-b).

2. Induction energy transmission system according to claim 1, **characterised in that** the receiving induction element (18a-b) and the further receiving induction element (20a-b) are not the same type.

3. Induction energy transmission system according to claim 1 or 2, **characterised by** at least one functional unit (22a-b) to which the receiving induction element (18a-b) in the operating state provides at least a large proportion of the electrical energy for an energy supply.

4. Induction energy transmission system according to claim 3, **characterised in that** the functional unit (22a) is provided for a separable coupling to the receiving unit (16a).

5. Induction energy transmission system according to claim 3 or 4, **characterised in that** the functional unit (22a-b) in the operating state is coupled to the receiving unit (16a-b) at least to a large extent on a side of the receiving unit (16a-b) that is remote from the supply unit (12a-b).

6. Induction energy transmission system according to one of claims 3 to 5, **characterised by** at least one safety unit (32a-b) that in the operating state checks at least a positioning of the functional unit (22a-b) on the receiving unit (16a-b) and introduces at least one action in dependence upon the check.

7. Induction energy transmission system according to one of claims 3 to 6, **characterised in that** the receiving unit (16a-b) has at least one receiving supply induction element (36a-b) that in the operating state inductively provides energy for the energy supply of the functional unit (22a-b).

8. Induction energy transmission system according to claims 6 and 7, **characterised in that** in the operating state the safety unit (32a-b) deactivates the receiving supply induction element (36a-b) in the event of an erroneous positioning of the functional unit (22a-b) on the receiving unit (36a-b).

9. Induction energy transmission system according to one of claims 3 to 8, **characterised in that** the functional unit (22a-b) in the operating state is provided so as to treat at least one item of food.

10. Induction energy transmission system according to claim 9, **characterised in that** the functional unit (22a-b) in the operating state is provided so as to thermally treat at least one item of food.

11. Induction energy transmission system according to claim 9 or 10, **characterised in that** the functional unit (22a) in the operating state is provided so as to mechanically treat at least one item of food.

12. Induction energy transmission system according to one of the preceding claims, **characterised in that** the supply unit (12a-b) is designed as a hob.

## Revendications

1. Système de transfert d'énergie par induction, en particulier système de cuisson à induction, comprenant au moins une unité d'alimentation (12a à b) qui présente au moins un élément d'induction d'alimentation (14a à b), fournissant de l'énergie par induction dans au moins un état de fonctionnement, et au moins une unité de réception (16a à b), présentant au moins un élément d'induction de réception (18a à b) qui reçoit, dans l'état de fonctionnement, au moins une partie de l'énergie fournie par l'élément d'induction d'alimentation (14a à b) et transforme au moins une grande partie de l'énergie reçue en énergie électrique, et au moins un élément d'induction de réception (20a à b) supplémentaire qui, dans l'état de fonctionnement, reçoit au moins en partie simultanément au moins une partie supplémentaire de l'énergie fournie par l'élément d'induction d'alimentation (14a à b) et transforme au moins une grande partie de l'énergie reçue en énergie thermique, dans lequel l'unité de réception (16a à b) est réalisée sous la forme d'une unité de mise en place qui présente au moins un espace de réception (30a à b) permettant d'accueillir des aliments, **caractérisé en ce que l'**élément d'induction de réception (20a à b) supplémentaire est réalisé sous la forme d'une paroi délimitant au moins partiellement l'espace de réception (30a à b) dans l'état de fonctionnement.

2. Système de transfert d'énergie par induction selon la revendication 1, **caractérisé en ce que** l'élément d'induction de réception (1818a à b) et l'élément d'induction de réception (2018a à b) supplémentaire sont de modèle différent.

3. Système de transfert d'énergie par induction selon la revendication 1 ou 2, **caractérisé par** au moins une unité fonctionnelle (22a à b) à laquelle l'élément d'induction de réception (18a à b) fournit, dans l'état de fonctionnement, au moins une grande partie de l'énergie électrique en vue de son alimentation en énergie.

4. Système de transfert d'énergie par induction selon la revendication 3, **caractérisé en ce que** l'unité fonctionnelle (22a) est prévue pour un couplage séparable avec l'unité de réception (16a).

5. Système de transfert d'énergie par induction selon la revendication 3 ou 4, **caractérisé en ce que**, dans l'état de fonctionnement, l'unité fonctionnelle (22a à b) est couplée à l'unité de réception (16a à b) au moins en grande partie sur un côté de l'unité de réception (16a à b) opposé à l'unité d'alimentation (12a à b).

6. Système de transfert d'énergie par induction selon l'une quelconque des revendications 3 à 5, **caractérisé par** au moins une unité de sécurité (32a à b) qui, dans l'état de fonctionnement, vérifie au moins un positionnement de l'unité fonctionnelle (22a à b) sur l'unité de réception (16a à b) et initie au moins une action en fonction de ladite vérification.

7. Système de transfert d'énergie par induction selon l'une quelconque des revendications 3 à 6, **caractérisé en ce que** l'unité de réception (16a à b) présente au moins un élément d'induction d'alimentation de réception (36a à b) qui, dans l'état de fonctionnement, fournit de l'énergie par induction à l'alimentation en énergie de l'unité fonctionnelle (22a à b).

8. Système de transfert d'énergie par induction selon les revendications 6 et 7, **caractérisé en ce que**, dans l'état de fonctionnement, l'unité de sécurité (32a à b) désactive l'élément d'induction d'alimentation de réception (36a à b) en cas de positionnement incorrect de l'unité fonctionnelle (22a à b) sur l'unité de réception (16a à b).

9. Système de transfert d'énergie par induction selon l'une quelconque des revendications 3 à 8, **caractérisé en ce que,** dans l'état de fonctionnement, l'unité fonctionnelle (22a à b) est prévue pour un traitement d'au moins un aliment.

10. Système de transfert d'énergie par induction selon la revendication 9, **caractérisé en ce que,** dans l'état de fonctionnement, l'unité fonctionnelle (22a à b) est prévue pour un traitement thermique d'au moins un aliment.

11. Système de transfert d'énergie par induction selon la revendication 9 ou 10, **caractérisé en ce que,** dans l'état de fonctionnement, l'unité fonctionnelle (22a) est prévue pour un traitement mécanique d'au moins un aliment.

12. Système de transfert d'énergie par induction selon l'une quelconque des revendications précédentes, **caractérisé en ce que** l'unité d'alimentation (1218a à b) est conçue comme une plaque de cuisson.
